# EUROPEAN PATENT APPLICATION

(11) **EP 4 761 187 A1**
(43) Date of publication of application: **17.06.2026**
(21) Application number: 24858238.9
(22) Date of filing: 05.08.2024
(51) Int. Cl.: H04L 12/28, H04W 48/08, H04W 48/16, H04W 76/10, H04W 12/06

(54) **NETWORK ACCESS METHOD AND APPARATUS**

(30) Priority: 30.08.2023 CN 202311128623
(71) Applicant: HUAWEI TECHNOLOGIES CO., LTD., Shenzhen, Guangdong 518129 (CN)
(72) Inventor: XU, Changping, Shenzhen, Guangdong 518129 (CN); TIAN, Jun, Shenzhen, Guangdong 518129 (CN); DU, Zihao, Shenzhen, Guangdong 518129 (CN); WANG, Jian, Shenzhen, Guangdong 518129 (CN); DING, Guozhi, Shenzhen, Guangdong 518129 (CN); XIE, Zichen, Shenzhen, Guangdong 518129 (CN)
(74) Representative: Goddar, Heinz J.
(86) International application number: PCT/CN2024/109922
(87) International publication number: WO 2025/044695

(57) **Abstract**

Embodiments of this application provide a network access method and an apparatus, to simplify a procedure for an IoT device to access a target router and ensure a more accurate network access occasion. The method includes: If a distance between a network configuration assistant device and the internet of things IoT device is within a first distance, the network configuration assistant device prompts a user to perform an authorization operation. The network configuration assistant device sends first information to the IoT device in response to the authorization operation of the user, where the first information is used by the IoT device to access the target router.

## Description

This application claims priority to Chinese Patent Application No. 202311128623.2, filed with the China National Intellectual Property Administration on August 30, 2023 and entitled "NETWORK ACCESS METHOD AND APPARATUS", which is incorporated herein by reference in its entirety.

### TECHNICAL FIELD

Embodiments of this application relate to the internet of things field, and more specifically, to a network access method and an apparatus.

### BACKGROUND

With rapid development of internet of things (internet of things, IoT) technologies, an increasing quantity of IoT devices access home networks. A user may install an application (application, APP) (or referred to as a home app, an IoT app, or the like) such as "AI Life" on a mobile terminal for access of the IoT device. For access of the IoT device to the home network, the user needs to scan a two-dimensional code of the IoT device to obtain product information stored by an IoT device manufacturer. Further, the user needs to enter a wireless fidelity (wireless fidelity, Wi-Fi) password, a personal identification number (personal identification number, PIN) of the IoT device, and the like to perform network configuration on the IoT device, so as to complete access. Therefore, a problem of a long and complex user operation procedure exists when the IoT device accesses the home network.

### SUMMARY

Embodiments of this application provide a network access method and an apparatus, to simplify a procedure for an IoT device to access a target router and ensure a more accurate network access occasion.

To achieve the foregoing objective, the following technical solutions are used in this application.

According to a first aspect, a network access method is provided. The method may be performed by a network configuration assistant device, or may be performed by a component of the network configuration assistant device, for example, a processor, a chip, or a chip system of the network configuration assistant device, or may be implemented by a logical module or software that can implement all or some functions of the network configuration assistant device. For example, the method may be performed by the network configuration assistant device. The method includes: If a distance between the network configuration assistant device and an internet of things IoT device is within a first distance, the network configuration assistant device prompts a user to perform an authorization operation. The network configuration assistant device sends first information to the IoT device in response to the authorization operation of the user, where the first information is used by the IoT device to access a target router.

According to the network access method provided in this embodiment of this application, if the network configuration assistant device determines that the distance between the network configuration assistant device and the IoT device is within the first distance, the network configuration assistant device sends, to the IoT device, the first information used by the IoT device to access the target router, so that the IoT device quickly accesses the target router based on the first information. This can simplify a procedure of accessing the target router by the IoT device. In addition, the network configuration assistant device determines the distance, to avoid misdetermining of the distance between the network configuration assistant device and the IoT device that may be caused by inconsistent radio frequency capabilities of different IoT devices, ensuring a more accurate network access occasion.

In this embodiment of this application, the method further includes: The network configuration assistant device sends a first broadcast packet. The network configuration assistant device receives a first response packet, where the first response packet includes signal strength that is of the first broadcast packet and that is measured by the IoT device. The network configuration assistant device determines, based on the signal strength of the first broadcast packet, that the distance between the network configuration assistant device and the IoT device is within the first distance. The network configuration assistant device sends the first broadcast packet to the IoT device, and the network configuration assistant device may determine, based on the signal strength that is of the first broadcast packet and that is included in the first response packet, whether the distance between the network configuration assistant device and the IoT device is within the first distance. Further, if the distance between the network configuration assistant device and the IoT device is within the first distance, the network configuration assistant device may prompt the user to perform the authorization operation. The network configuration assistant device sends the first broadcast packet, so that stability of the first broadcast packet can be improved.

In a possible implementation, the first response packet further includes a device label of the IoT device. The device label of the IoT device identifies the IoT device, or the device label of the IoT device identifies a type of the IoT device. That the network configuration assistant device determines, based on the signal strength of the first broadcast packet, that the distance between the network configuration assistant device and the IoT device is within the first distance includes: The network configuration assistant device determines, based on the signal strength of the first broadcast packet and the device label of the IoT device, that the distance between the network configuration assistant device and the IoT device is within the first distance. Based on the device label, the network configuration assistant device may determine the first distance of the corresponding IoT device, which is more flexible. Further, the network configuration assistant device may determine, based on the signal strength of the first broadcast packet and the device label of the IoT device, that the distance between the network configuration assistant device and the IoT device is within the first distance.

In this embodiment of this application, the authorization operation includes at least one of the following: touching, pressing, or shaking. Authorization is performed based on a user behavior, so that the user does not enter a password again, which simplifies a network configuration procedure of the IoT device.

In this embodiment of this application, the method further includes: The network configuration assistant device sends a probe packet, where the probe packet includes second information and a first sequence number encrypted by using a public key, and the second information indicates a hardware response of the IoT device. The network configuration assistant device sends confirmation information to the IoT device in response to the hardware response of the IoT device, where the confirmation information is used to confirm the IoT device corresponding to the first sequence number encrypted by using the public key. The network configuration assistant device sends the probe packet that carries the second information and the first sequence number encrypted by using the public key, so that the IoT device determines that the probe packet is specific to the IoT device. Further, the IoT device triggers the hardware response based on the second information, and the user may confirm the IoT device based on the hardware response. Further, the network configuration assistant device sends the confirmation information to the IoT device, to confirm the IoT device. In a possible scenario, when there are a plurality of similar IoT devices in an environment, the IoT device may trigger the hardware response of the IoT device, so that the user confirms the IoT device, to prevent an economic loss caused by incorrect access of an unauthorized device.

In this embodiment of this application, the method further includes: The network configuration assistant device receives a second broadcast packet from the IoT device, where the second broadcast packet includes a media access control MAC address of the IoT device and the public key, and the MAC address and the public key are used to generate the first sequence number encrypted by using the public key. The IoT device sends the second broadcast packet, so that the IoT device can be displayed in a scanning result of the network configuration assistant device.

In this embodiment of this application, the distance between the network configuration assistant device and the IoT device is obtained through periodic measurement. The network configuration assistant device periodically measures the distance between the network configuration assistant device and the IoT device, to improve accuracy of the distance that is between the network configuration assistant device and the IoT device and that is determined by the network configuration assistant device.

According to a second aspect, a network access method is provided. The method may be performed by an IoT device, or may be performed by a component of the IoT device, for example, a processor, a chip, or a chip system of the IoT device, or may be implemented by a logical module or software that can implement all or some of functions of the IoT device. For example, the method may be performed by the IoT device. The method includes: The IoT device receives first information, where the first information is sent by a network configuration assistant device in response to an authorization operation of a user after the network configuration assistant device determines that a distance between the network configuration assistant device and the IoT device is within a first distance and prompts the user to perform the authorization operation, and the first information is used by the IoT device to access a target router. The IoT device accesses the target router based on the first information.

According to the network access method provided in this embodiment of this application, if the network configuration assistant device determines that the distance between the network configuration assistant device and the IoT device is within the first distance, the network configuration assistant device sends, to the IoT device, the first information used by the IoT device to access the target router, so that the IoT device quickly accesses the target router based on the first information. This can simplify a procedure of accessing the target router by the IoT device. In addition, the network configuration assistant device determines the distance, to avoid misdetermining of the distance between the network configuration assistant device and the IoT device that may be caused by inconsistent radio frequency capabilities of different IoT devices, ensuring a more accurate network access occasion.

In this embodiment of this application, the method further includes: The IoT device receives a first broadcast packet, and measures signal strength of the first broadcast packet. The IoT device sends a first response packet, where the first response packet includes the signal strength that is of the first broadcast packet and that is measured by the IoT device. The IoT device receives the first broadcast packet from the network configuration assistant device, and the IoT device sends the first response packet to the network configuration assistant device. The network configuration assistant device may determine, based on the signal strength that is of the first broadcast packet and that is included in the first response packet, whether the distance between the network configuration assistant device and the IoT device is within the first distance. Further, if the distance between the network configuration assistant device and the IoT device is within the first distance, the network configuration assistant device may prompt the user to perform the authorization operation. The network configuration assistant device sends the first broadcast packet, so that stability of the first broadcast packet can be improved.

In a possible implementation, the first response packet further includes a device label of the IoT device. The device label of the IoT device identifies the IoT device, or the device label of the IoT device identifies a type of the IoT device. Based on the device label, the network configuration assistant device may determine the first distance of the corresponding IoT device, which is more flexible.

In this embodiment of this application, the authorization operation includes at least one of the following: touching, pressing, or shaking. Authorization is performed based on a user behavior, so that the user does not enter a password again, which simplifies a network configuration procedure of the IoT device.

In this embodiment of this application, the method further includes: The IoT device receives a probe packet from the network configuration assistant device, where the probe packet includes second information and a first sequence number encrypted by using a public key, and the second information indicates a hardware response of the IoT device. The IoT device triggers the hardware response based on the second information. The IoT device receives confirmation information from the network configuration assistant device, and accesses the target router based on the confirmation information, where the confirmation information is used to confirm the IoT device corresponding to the first sequence number encrypted by using the public key. The IoT device receives the probe packet from the network configuration assistant device, where the probe packet includes the second information and the first sequence number encrypted by using the public key, so that the IoT device determines that the probe packet is specific to the IoT device. Further, the IoT device triggers the hardware response based on the second information, and the user may confirm the IoT device based on the hardware response. Further, the IoT device receives the confirmation information from the network configuration assistant device, and accesses the target router based on the confirmation information. In a possible scenario, when there are a plurality of similar IoT devices in an environment, the IoT device may trigger the hardware response of the IoT device, so that the user confirms the IoT device, to prevent an economic loss caused by incorrect access of an unauthorized device.

In this embodiment of this application, the method further includes: The IoT device sends a second broadcast packet to the network configuration assistant device, where the second broadcast packet includes a media access control MAC address of the IoT device and the public key, and the MAC address and the public key are used to generate the first sequence number encrypted by using the public key. In this way, the IoT device can be displayed in a scanning result of the network configuration assistant device.

In this embodiment of this application, the distance between the network configuration assistant device and the IoT device is obtained through periodic measurement. The network configuration assistant device periodically measures the distance between the network configuration assistant device and the IoT device, to improve accuracy of the distance that is between the network configuration assistant device and the IoT device and that is determined by the network configuration assistant device.

According to a third aspect, a network access method is provided. The method may be performed by a network configuration assistant device, or may be performed by a component of the network configuration assistant device, for example, a processor, a chip, or a chip system of the network configuration assistant device, or may be implemented by a logical module or software that can implement all or some functions of the network configuration assistant device. For example, the method may be performed by the network configuration assistant device. The method includes: The network configuration assistant device sends a probe packet, where the probe packet includes second information and a first sequence number encrypted by using a public key, and the second information indicates a hardware response of an IoT device. The network configuration assistant device sends confirmation information to the IoT device in response to the hardware response of the IoT device, where the confirmation information is used to confirm the IoT device corresponding to the first sequence number encrypted by using the public key.

According to the network access method provided in this embodiment of this application, the network configuration assistant device sends the probe packet that carries the second information and the first sequence number encrypted by using the public key, so that the IoT device determines that the probe packet is specific to the IoT device. Further, the IoT device triggers the hardware response based on the second information, and a user may confirm the IoT device based on the hardware response. Further, the network configuration assistant device sends the confirmation information to the IoT device, to confirm the IoT device. In a possible scenario, when there are a plurality of similar IoT devices in an environment, the IoT device may trigger the hardware response of the IoT device, so that the user confirms the IoT device, to prevent an economic loss caused by incorrect access of an unauthorized device.

In this embodiment of this application, the method further includes: The network configuration assistant device receives a second broadcast packet from the IoT device, where the second broadcast packet includes a media access control MAC address of the IoT device and the public key, and the MAC address and the public key are used to generate the first sequence number encrypted by using the public key. The IoT device sends the second broadcast packet, so that the IoT device can be displayed in a scanning result of the network configuration assistant device.

According to a fourth aspect, a network access method is provided. The method may be performed by an IoT device, or may be performed by a component of the IoT device, for example, a processor, a chip, or a chip system of the IoT device, or may be implemented by a logical module or software that can implement all or some of functions of the IoT device. For example, the method may be performed by an IoT device. The method includes: The IoT device receives a probe packet from a network configuration assistant device, where the probe packet includes second information and a first sequence number encrypted by using a public key, and the second information indicates a hardware response of the IoT device. The IoT device triggers the hardware response based on the second information. The IoT device receives confirmation information from the network configuration assistant device, and accesses a target router based on the confirmation information, where the confirmation information is used to confirm the IoT device corresponding to the first sequence number encrypted by using the public key.

According to the network access method provided in this embodiment of this application, the IoT device receives the probe packet from the network configuration assistant device, where the probe packet includes the second information and the first sequence number encrypted by using the public key, so that the IoT device determines that the probe packet is specific to the IoT device. Further, the IoT device triggers the hardware response based on the second information, and the user may confirm the IoT device based on the hardware response. Further, the IoT device receives the confirmation information from the network configuration assistant device, and accesses the target router based on the confirmation information. In a possible scenario, when there are a plurality of similar IoT devices in an environment, the IoT device may trigger the hardware response of the IoT device, so that the user confirms the IoT device, to prevent an economic loss caused by incorrect access of an unauthorized device.

In this embodiment of this application, the method further includes: The IoT device sends a second broadcast packet to the network configuration assistant device, where the second broadcast packet includes a media access control MAC address of the IoT device and the public key, and the MAC address and the public key are used to generate the first sequence number encrypted by using the public key. In this way, the IoT device can be displayed in a scanning result of the network configuration assistant device.

According to a fifth aspect, a communication apparatus is provided to implement the foregoing methods. The communication apparatus may be the network configuration assistant device in the first aspect or the third aspect, or an apparatus, for example, a chip, included in the network configuration assistant device; or the communication apparatus may be the IoT device in the second aspect or the fourth aspect, or an apparatus, for example, a chip, included in the IoT device.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a communication module. The communication module may include an output module (or a sending module) and an input module (or a receiving module), which are respectively configured to implement an output-type (or sending-type) function and an input-type (or receiving-type) function according to any one of the foregoing aspects or any possible design of the foregoing aspects. The processing module may be configured to implement a processing function according to any one of the foregoing aspects or any possible design of the foregoing aspects.

Optionally, the communication apparatus further includes a storage module, configured to store a program instruction and data.

According to a sixth aspect, a communication apparatus is provided, including at least one processor. The processor is configured to enable, by running a computer program or instructions or by using a logic circuit, the communication apparatus to perform the method according to any one of the foregoing aspects. The communication apparatus may be the network configuration assistant device in the first aspect or the third aspect, or an apparatus, for example, a chip, included in the network configuration assistant device; or the communication apparatus may be the IoT device in the second aspect, or an apparatus, for example, a chip, included in the IoT device.

In some possible designs, the communication apparatus further includes a memory configured to store the computer instructions and/or a configuration file of the logic circuit. Optionally, the memory and the processor are integrated together, or the memory is independent of the processor.

In a possible design, the communication apparatus further includes a communication interface configured to input and/or output a signal.

In some possible designs, the communication interface is an interface circuit, and is configured to read and write computer instructions. For example, the interface circuit is configured to: receive computer-executable instructions (where the computer-executable instructions are stored in the memory, and may be directly read from the memory, or may be read via another component), and transmit the computer-executable instructions to the processor.

In some possible designs, the communication interface is configured to communicate with a module outside the communication apparatus.

In some possible designs, the communication apparatus may be a chip system. When the communication apparatus is a chip system, the chip system may include a chip, or may include the chip and another discrete component.

According to a seventh aspect, a communication apparatus is provided, including a logic circuit and an interface circuit. The interface circuit is configured to input information and/or output information. The logic circuit is configured to: perform the method according to any one of the foregoing aspects, and perform processing and/or generate the output information based on the input information. The communication apparatus may be the network configuration assistant device in the first aspect or the third aspect, or an apparatus, for example, a chip, included in the network configuration assistant device; or the communication apparatus may be the IoT device in the second aspect or the fourth aspect, or an apparatus, for example, a chip, included in the IoT device.

It may be understood that when the communication apparatus provided in any one of the fifth aspect to the seventh aspect is a chip, the foregoing sending action/function may be understood as outputting the information, and the foregoing receiving action/function may be understood as inputting the information.

According to an eighth aspect, a computer-readable storage medium is provided. The computer-readable storage medium stores a computer program or instructions. When the computer program or the instructions are executed by a processor, the method according to any one of the foregoing aspects is performed.

According to a ninth aspect, a computer program product is provided. When the computer program product is executed by a processor, the method according to any one of the foregoing aspects is performed.

According to a tenth aspect, a communication apparatus is provided. The communication apparatus includes modules/units configured to perform the method according to the first aspect or the second aspect.

According to an eleventh aspect, a communication method is provided. The communication method includes the method according to the first aspect and the method according to the second aspect.

According to a twelfth aspect, a communication system is provided. The communication system includes the network configuration assistant device according to the first aspect or the third aspect and the IoT device according to the second aspect or the fourth aspect. The network configuration assistant device or the IoT device may be implemented as the communication apparatus provided in any one of the fifth aspect to the seventh aspect.

For technical effects brought by any design manner in the fifth aspect to the twelfth aspect, refer to the technical effects brought by different design manners in the first aspect to the fourth aspect. Details are not described herein again.

### BRIEF DESCRIPTION OF DRAWINGS

FIG. 1 is a diagram of a network configuration procedure of an IoT device according to an embodiment of this application;
FIG. 2 is a diagram of a procedure of performing network configuration on an IoT device by using a soft AP technology according to an embodiment of this application;
FIG. 3 is a diagram of a system architecture according to an embodiment of this application;
FIG. 4 is a diagram of a structure of a network configuration assistant device 100 according to an embodiment of this application;
FIG. 5 is a block diagram of a software structure of a network configuration assistant device 100 according to an embodiment of this application;
FIG. 6 is a diagram of a structure of an IoT device 200 according to an embodiment of this application;
FIG. 7 is a diagram of a network access method according to an embodiment of this application;
FIG. 8 is a diagram in which a first application of a network configuration assistant device prompts a user to perform an authorization operation;
FIG. 9 is a diagram of a scanning result interface of a first application according to an embodiment of this application;
FIG. 10 is a diagram in which there are a plurality of similar devices in an environment according to an embodiment of this application;
FIG. 11 is a diagram in which a user confirms an IoT device according to an embodiment of this application;
FIG. 12 is a diagram of another network access method according to an embodiment of this application; and
FIG. 13 is a diagram of a communication apparatus according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. At least one of the following items (pieces) or a similar expression thereof indicates any combination of these items, including a single item (piece) or any combination of a plurality of items (pieces). For example, at least one item (piece) of a, b, and (or) c may indicate: a, b, c, a and b, a and c, b and c, or a, b, and c, where a, b, and c each may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" mentioned throughout this specification means that particular features, structures, or characteristics related to embodiments are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, mutual reference may be made between same or similar parts of different embodiments. In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding of technical solutions provided in embodiments of this application, technologies related to embodiments of this application are first described briefly.

### 1. Network configuration procedure of an IoT device.

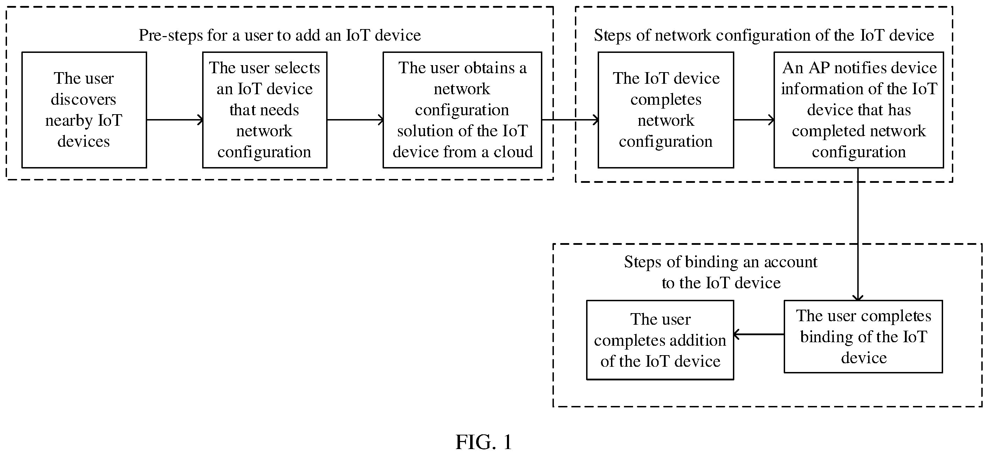

FIG. 1 is a diagram of a network configuration procedure of an IoT device according to an embodiment of this application. As shown in FIG. 1, the network configuration procedure of the IoT shown in FIG. 1 includes: pre-steps for a user to add the IoT device, steps of network configuration of the IoT device, and steps of binding an account to the IoT device.

The pre-steps for the user to add the IoT device include the following.
1. The user discovers nearby IoT devices. For example, the user uses a network configuration assistant device to display a list of the scanned nearby IoT devices.
2. The user selects the IoT device that needs network configuration. For example, the user selects, from the list of the scanned nearby IoT devices that is displayed on the network configuration assistant device, the IoT device that needs network configuration. Network configuration in this embodiment of this application means that the IoT device is connected to an access point (access point, AP). For example, the AP may be a home router.
3. The user obtains a network configuration solution of the IoT device from a cloud. For example, the user obtains the network configuration solution of the IoT device from a cloud server by using the network configuration assistant device.

In this embodiment of this application, the user needs to perform app scanning, device addition, manual password configuration, and the like, so that the IoT device can be connected to the AP and perform a subsequent procedure of registering with the server.

The steps of network configuration of the IoT device include the following.
1. The IoT device completes network configuration and is connected to the AP.
2. The AP notifies device information of the IoT device that has completed network configuration.

The steps of binding the account to the IoT device include the following.
1. The user completes binding of the IoT device.
2. The user completes addition of the IoT device.

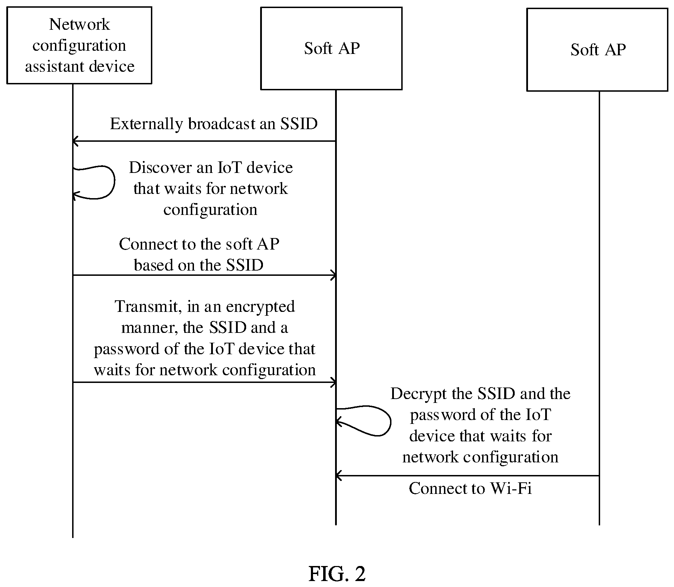

In the following, network configuration performed by using a soft AP (soft AP) is used as an example for description. FIG. 2 is a diagram of a procedure of performing network configuration on an IoT device by using a soft AP technology according to an embodiment of this application. In this embodiment of this application, the soft AP is not greatly different from the AP, but an access capability and a coverage area of the soft AP are far inferior to those of the AP. Usually, only several or 10-plus wireless devices can access the soft AP. In addition, the soft AP is not suitable for long-term outdoor placement and cannot be placed in high positions such as a ceiling, and mounting of an outdoor antenna is inconvenient. As a result, a signal coverage area of the soft AP is greatly limited. In this embodiment of this application, the soft AP may be a home router.

As shown in FIG. 2, the network configuration procedure includes the following steps.

Step 1: The soft AP externally broadcasts a service set identifier (service set identifier, SSID).

Step 2: A network configuration assistant device is connected to the soft AP based on the SSID to discover an IoT device that waits for network configuration.

Step 3: The network configuration assistant device transmits, to the soft AP in an encrypted manner, the SSID and a password of the IoT device that waits for network configuration.

Step 4: The soft AP decrypts the SSID and the password of the IoT device that waits for network configuration, so that the IoT device that waits for network configuration is connected to Wi-Fi. For example, the soft AP further enables the IoT device to register with a target server.

In this embodiment of this application, when only a single IoT device waits for network configuration, a user may easily identify the corresponding IoT device based on the SSID and/or a type of the IoT device.

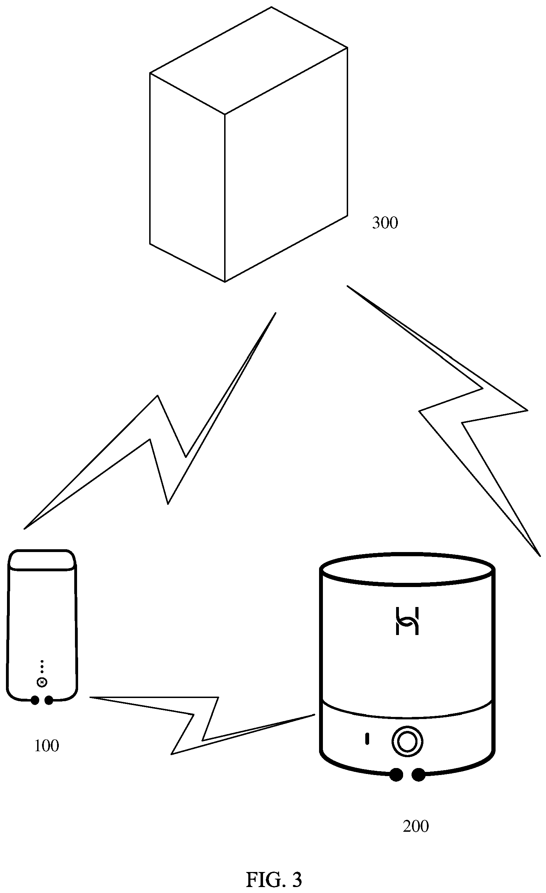

FIG. 3 is a diagram of a system architecture according to an embodiment of this application. The system architecture includes at least one network configuration assistant device 100, at least one IoT device 200, and a server 300.

The network configuration assistant device 100 is configured to bind the IoT device 200. The network configuration assistant device 100 may perform network configuration on the IoT device 200. In some embodiments, the network configuration assistant device 100 may be, for example, a mobile phone, a tablet computer, a personal computer (personal computer, PC), a personal digital assistant (personal digital assistant, PDA), a smartwatch, a netbook, or a wearable electronic device. A specific form of the network configuration assistant device 100 is not specifically limited in this application.

The IoT device 200 may be, for example, a hardware device of a smart home, and may include a mobile terminal, a home appliance, a sensor device, and the like. For example, the IoT device 200 may be a smartphone, a smart speaker, a smart refrigerator, a smart television, a smart lamp, a smart socket, an air purifier, a humidifier, a smart hood, a smart desk lamp, a smart lock, a smart wiring board, a smart electromagnetic oven, a smart camera, or the like. Alternatively, the IoT device 200 may be a smoke sensor, a human body sensor, a temperature sensor, a humidity sensor, a door/window sensor, a PM2.5 air sensor, or the like. This is not limited in embodiments of this application.

The server 300 may be, for example, a cloud server or a home cloud server, or may be a server cluster including a plurality of servers. In some embodiments, the network configuration assistant device 100 may request the server 300 to register for the IoT device. In this way, the server 300 records information about a home app account bound to the IoT device 200. In other words, the server 300 stores related control information of the IoT device 200, for example, an account of a home application (for example, an "AI Life" application) to which the IoT device logs in or an account of an IoT device application (for example, a smart speaker application), and a device identifier of the IoT device.

For example, the system architecture in this embodiment of this application may be applied to a whole-home smart scenario in which a plurality of IoT devices wait for network configuration. Alternatively, for example, the system architecture in this embodiment of this application may be applied to a whole-home smart scenario in which a large quantity of IoT devices of a same model wait for network configuration. A scenario to which the system architecture is applied is not specifically limited in embodiments of this application.

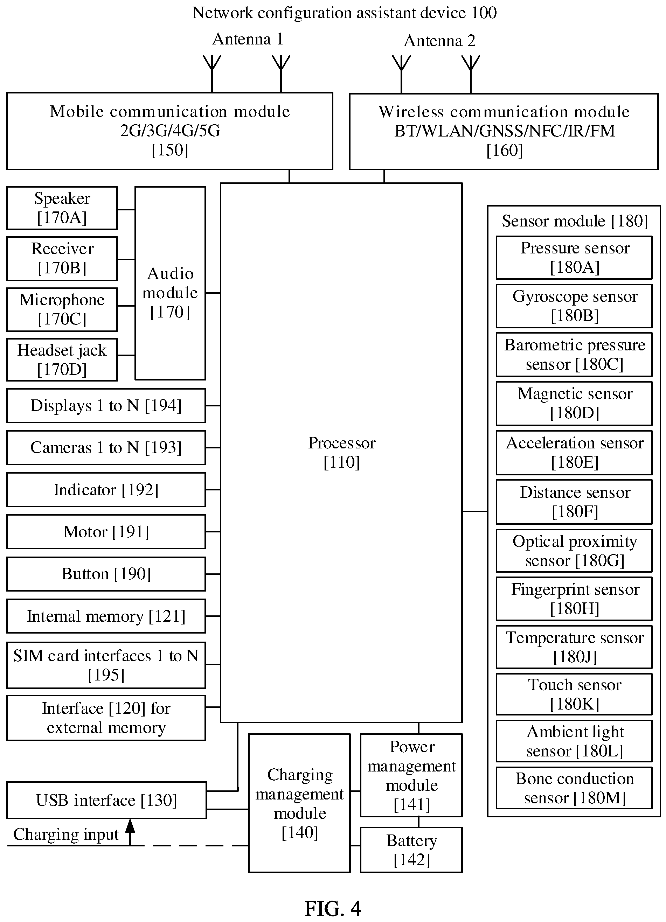

FIG. 4 is a diagram of a structure of a network configuration assistant device 100 according to an embodiment of this application.

The network configuration assistant device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the network configuration assistant device 100. In some other embodiments of this application, the network configuration assistant device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules that is shown in this embodiment of this application is merely an example for description, and does not constitute a limitation on the structure of the network configuration assistant device 100. In some other embodiments of this application, the network configuration assistant device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the network configuration assistant device 100. The charging management module 140 may further supply power to an electronic device through the power management module 141 while charging the battery 142.

The power management module 141 is configured to connect to the battery 142, the charging management module 140, and the processor 110. The power management module 141 receives an input of the battery 142 and/or an input of the charging management module 140, to supply power to the processor 110, the internal memory 121, the external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the network configuration assistant device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the network configuration assistant device 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the network configuration assistant device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, the at least some functional modules of the mobile communication module 150 may be disposed in a same component as at least some modules of the processor 110.

The wireless communication module 160 may provide a wireless communication solution that is applied to the network configuration assistant device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, the antenna 1 and the mobile communication module 150 in the network configuration assistant device 100 are coupled, and the antenna 2 and the wireless communication module 160 in the network configuration assistant device 100 are coupled, so that the network configuration assistant device 100 can communicate with a network and another device based on a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation systems, SBAS).

The network configuration assistant device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The network configuration assistant device 100 may implement a photographing function through the ISP, the camera 193, the video codec, the GPU, the display 194, the application processor, and the like.

The internal memory 121 may be configured to store computer-executable program code. The executable program code includes instructions. The processor 110 runs the instructions stored in the internal memory 121, to perform various function applications of the network configuration assistant device 100 and data processing. The internal memory 121 may include a program storage area and a data storage area. The program storage area may store an operating system, an application required by at least one function (for example, a voice playing function or an image playing function), and the like. The data storage area may store data (such as audio data and a phone book) created during use of the network configuration assistant device 100, and the like. In addition, the internal memory 121 may include a high-speed random access memory, or may include a non-volatile memory, for example, at least one magnetic disk storage device, a flash memory device, or a universal flash storage (universal flash storage, UFS).

The network configuration assistant device 100 may implement an audio function, for example, music playing or recording, through the audio module 170, the speaker 170A, the receiver 170B, the microphone 170C, the headset jack 170D, the application processor, and the like.

A software system of the network configuration assistant device 100 may use a layered architecture, an event-driven architecture, a microkernel architecture, a micro service architecture, or a cloud architecture. In an embodiment of this application, an Android system with a layered architecture is used as an example to describe a software structure of the network configuration assistant device 100.

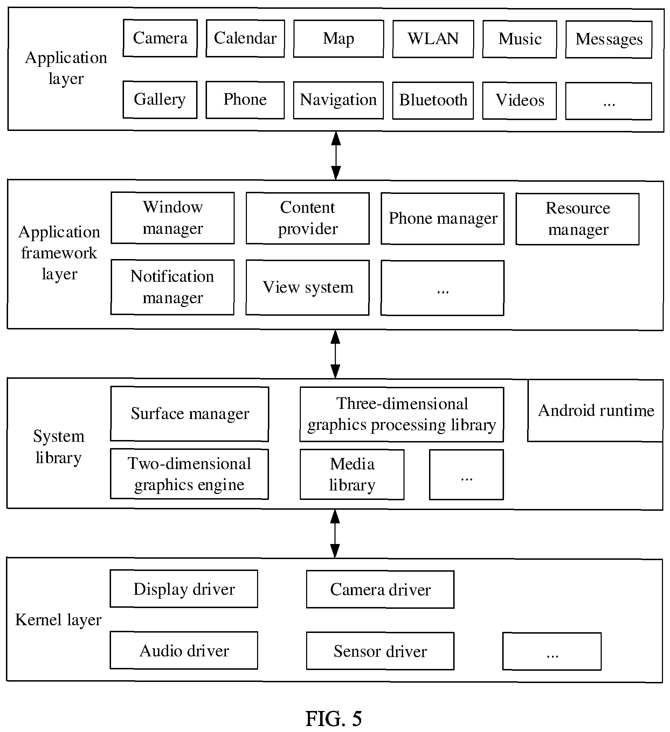

FIG. 5 is a block diagram of a software structure of a network configuration assistant device 100 according to an embodiment of this application.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages. In this embodiment of this application, the application layer may include a first application, configured to provide a human-machine interaction interface between the network configuration assistant device 100 and an IoT device 200. The first application may be a smart home (for example, an "AI Life" app), or may be a dedicated application of an IoT device (for example, a smart speaker app).

In this embodiment of this application, in a possible implementation, when a user carries the network configuration assistant device 100 to approach the IoT device 200, if a distance between the network configuration assistant device 100 and the IoT device is within a first distance, the first application of the network configuration assistant device 100 may prompt the user to perform an authorization operation.

In this embodiment of this application, the network configuration assistant device 100 may sink, to the framework layer, a capability and data that are in the first application and that are related to network access of the IoT device. That is, a service that is in the first application and that is related to IoT network access is set as a system service, for example, an "IoT device management module".

As shown in FIG. 5, the application packages may include applications such as Camera, Gallery, Calendar, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like. In this embodiment of this application, the window manager is configured to determine whether the network configuration assistant device has a status bar that prompts the user to perform authorization, and the like.

The content provider is configured to: store and obtain data, and enable the data to be accessed by an application. The data may include a video, an image, audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including an SMS message notification icon may include a text display view and an image display view. In this embodiment of this application, the view system includes a display interface including a first application notification icon, and the like.

The phone manager is configured to provide a communication function of the network configuration assistant device 100, for example, management of a call status (including answering, declining, or the like).

The resource manager provides various resources such as a localized character string, an icon, an image, a layout file, and a video file for an application.

The notification manager enables an application to display notification information in a status bar, for example, a notification prompting the user to perform authorization. The notification manager may be configured to convey a notification-type message that may automatically disappear after a short pause without requiring user interaction. For example, the notification manager is configured to notify download completion, give a message notification, and the like. The notification manager may alternatively be a notification that appears in a top status bar of the system in a form of graph or scroll bar text, for example, a notification of an application running on the background, or may be a notification that appears on a screen in a form of dialog window. For example, text information is displayed in the status bar, an alert tone is made, an electronic device vibrates, or an indicator blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the network configuration assistant device 100 with reference to a photographing capture scenario.

When the touch sensor 280K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a single-tap touch operation, and a control corresponding to the single-tap operation is a control of a camera application icon is used. A camera application invokes an interface of the application framework layer to start the camera application, then enables the camera driver by invoking the kernel layer, and captures a static image or a video by using the camera 193.

In addition, the composition structures shown in FIG. 4 and FIG. 5 do not constitute a limitation on the network configuration assistant device 100. In addition to the components shown in FIG. 4 and FIG. 5, the network configuration assistant device 100 may include more or fewer components than those shown in the figure, or some components may be combined, or different component arrangements may be used.

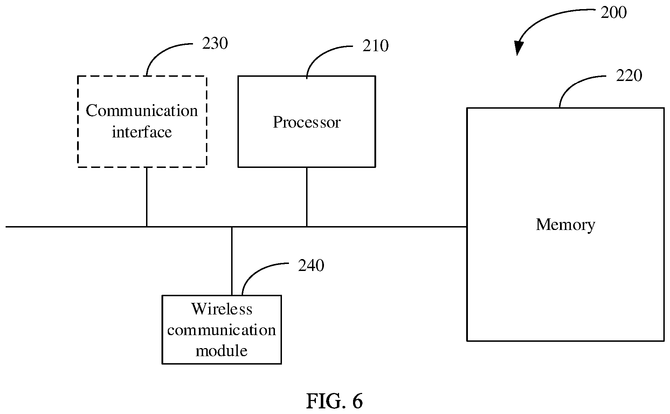

FIG. 6 is a diagram of a structure of an IoT device 200 according to an embodiment of this application. The IoT device 200 may include one or more processors 210, one or more memories 220, one or more communication interfaces 230, a wireless communication module 240, one or more antennas, and the like. The processor 210, the memory 220, the communication interface 230, and the wireless communication module 240 are connected through a bus.

The processor 210 may include a general-purpose central processing unit (Central Processing Unit, CPU), a microprocessor, an application-specific integrated circuit (Application-Specific Integrated Circuit, ASIC), an integrated circuit configured to control program execution of the solution of this application, or the like. In an example, the processor 210 may also include a plurality of CPUs, and the processor 210 may be a single-core (single-CPU) processor or a multicore (multi-CPU) processor. The processor herein may be one or more devices, circuits, or processing cores configured to process data (for example, computer program instructions).

The memory 220 may be configured to store computer-executable program code. The executable program code includes instructions. An internal memory may include a program storage area and a data storage area. The program storage area may store a program or instructions that need to be used in this embodiment of this application, an operating system, and the like.

The communication interface 230 may be configured to communicate with another device or a communication network, such as the Ethernet or a wireless local area network (wireless local area network, WLAN). In some examples, the IoT device 200 may alternatively not include the communication interface 230. This is not limited in embodiments of this application.

The wireless communication module 240 may provide a wireless communication solution that is applied to the IoT device 200 and that includes a WLAN (for example, Wi-Fi) network, Bluetooth, NFC, an infrared technology, and the like. The wireless communication module 240 may be one or more components integrating at least one communication processing module. The wireless communication module 240 receives an electromagnetic wave through an antenna, performs frequency modulation and filtering processing on an electromagnetic wave signal, and sends a processed signal to the processor 210. The wireless communication module 240 may further receive a to-be-sent signal from the processor 210, perform frequency modulation and amplification on the to-be-sent signal, and convert a processed signal into an electromagnetic wave for radiation through the antenna.

In addition, the composition structure shown in FIG. 6 does not constitute a limitation on the IoT device 200. In addition to the components shown in FIG. 6, the IoT device 200 may include more or fewer components than those shown in the figure, or some components may be combined, or different component arrangements may be used.

With reference to the system architecture shown in FIG. 3, the following describes a network access method provided in an embodiment of this application.

It should be noted that in the following embodiments of this application, a name of a message between devices, a name of each parameter, a name of each piece of information, or the like is merely an example, and may be another name in another embodiment. This is not specifically limited in the method provided in this application.

It may be understood that in embodiments of this application, each device may perform some or all steps in embodiments of this application, and these steps or operations are merely examples. In embodiments of this application, another operation or various operation variants may alternatively be performed. In addition, the steps may be performed in a sequence different from a sequence presented in embodiments of this application, and it is possible that not all operations in embodiments of this application need to be performed.

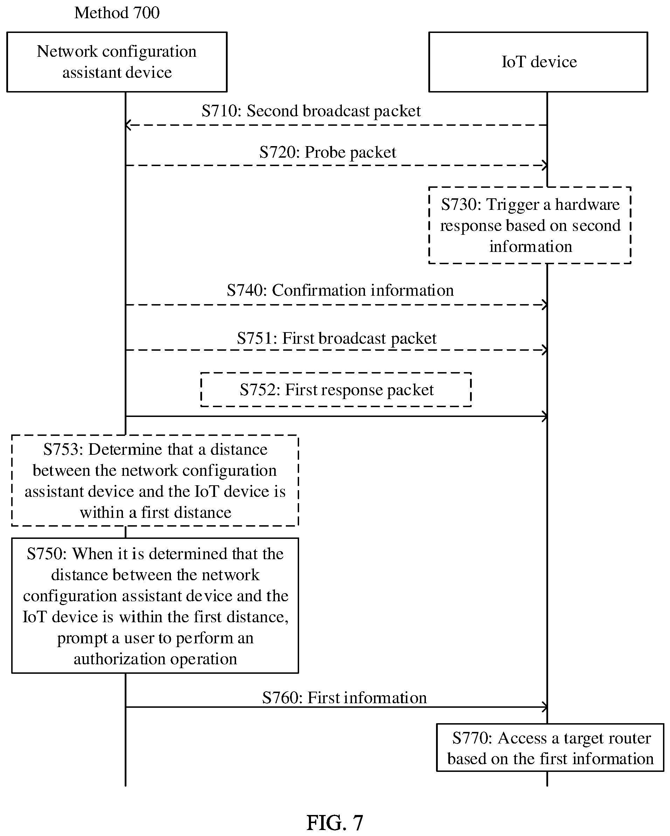

FIG. 7 is a diagram of an example of a network access method according to an embodiment of this application. The method is described by using interaction between a network configuration assistant device and an IoT device as an example. Certainly, actions of the network configuration assistant device in the method may alternatively be performed by an apparatus or a module in the network configuration assistant device, for example, a chip, a processor, or a processing unit in the network configuration assistant device. Actions of the IoT device in the method may alternatively be performed by an apparatus or a module in the IoT device, for example, a chip, a processor, or a processing unit in the IoT device. This is not specifically limited in embodiments of this application. Processing performed by a single execution body (for example, the network configuration assistant device or the IoT device) in this embodiment of this application may alternatively be divided to be performed by a plurality of execution bodies. These execution bodies may be logically and/or physically separated. For example, as shown in FIG. 7, the network access method 700 provided in this embodiment of this application includes the following steps.

S750: If a distance between the network configuration assistant device and the IoT device is within a first distance, the network configuration assistant device prompts a user to perform an authorization operation.

In this embodiment of this application, the network configuration assistant device is a device that has accessed a target router, and the network configuration assistant device stores configuration information of the target router, for example, Wi-Fi configuration information of the target router.

In this embodiment of this application, that the network configuration assistant device prompts the user to perform the authorization operation may be that a first application of the network configuration assistant device prompts the user to perform the authorization operation.

For example, the network configuration assistant device may be a mobile phone, and the first application may be a mobile phone app. When the user holds the mobile phone close to the IoT device, that the network configuration assistant device prompts the user to perform the authorization operation may be that an interface is displayed in the mobile phone app to prompt the user to perform the authorization operation on the IoT device.

Alternatively, for example, the network configuration assistant device may be a button (button). When the user holds the button close to the IoT device, the button may light up or an LED light blinks to prompt the user to perform the authorization operation.

Alternatively, for example, the network configuration assistant device may be an independent product or another IoT device, and the user may perform the authorization operation based on a display interface of a device in a corresponding form. This is not limited in embodiments of this application.

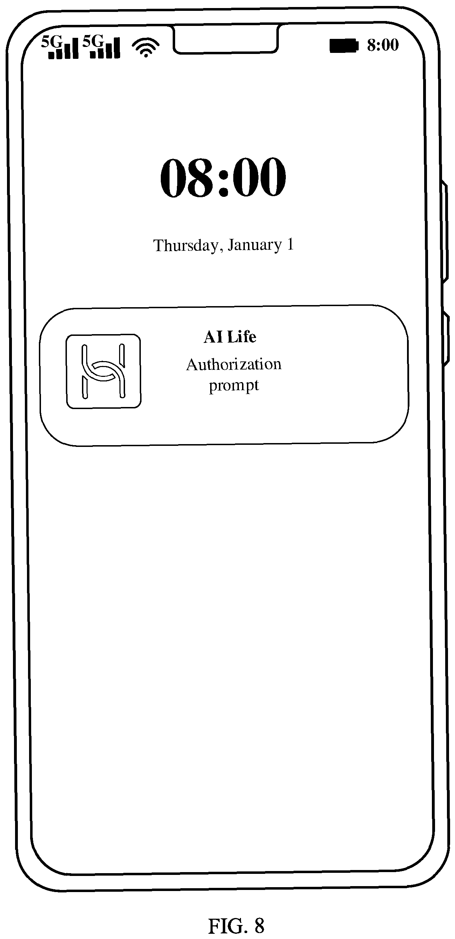

FIG. 8 is a diagram in which a first application of a network configuration assistant device prompts a user to perform an authorization operation. As shown in FIG. 8, for example, the network configuration assistant device is a mobile phone. If a distance between the mobile phone and the IoT device is within the first distance, an interface is displayed in the first application of the mobile phone, to prompt the user to perform the authorization operation.

S760: In response to the authorization operation of the user, the network configuration assistant device sends first information to the IoT device. Correspondingly, the IoT device receives the first information from the network configuration assistant device.

In this embodiment of this application, the authorization operation of the user may include at least one of the following: touching, pressing, shaking, or another gesture. For example, the network configuration assistant device is a mobile phone, and the authorization action of the user may be touching or shaking. Alternatively, the network configuration assistant device is a button, and the authorization action of the user may be pressing the button. This is not limited in embodiments of this application. Authorization is performed based on the user action, so that the user does not enter a password again, which simplifies a network configuration procedure of the IoT device.

In this embodiment of this application, the first information may be used by the IoT device to access the target router. For example, the first information may include information related to the target router, for example, the SSID and the password described in the foregoing related technology. For example, the target router may be a home router, and the first information is used to enable the IoT device to access the home router. Alternatively, for example, the first information may further include a registration code that is of the IoT device and that is obtained by the network configuration assistant device from a server, where the registration code is used to enable the IoT device to further register with the server after accessing the target router. This is not limited in embodiments of this application.

For example, the network configuration assistant device may send the first information to the IoT device by using Bluetooth low energy (Bluetooth low energy, BLE).

S770: The IoT device accesses the target router based on the first information.

In this embodiment of this application, the IoT device may access the target router based on the first information sent by the network configuration assistant device, and further register with the server.

According to the network access method provided in this embodiment of this application, if the network configuration assistant device determines that the distance between the network configuration assistant device and the IoT device is within the first distance, the network configuration assistant device sends, to the IoT device, the first information used by the IoT device to access the target router, so that the IoT device quickly accesses the target router based on the first information. Compared with a conventional technology, this can simplify a procedure of accessing the target router by the IoT device. In addition, the network configuration assistant device determines the distance, to avoid misdetermining of the distance between the network configuration assistant device and the IoT device that may be caused by inconsistent radio frequency capabilities of different IoT devices, ensuring a more accurate network access occasion.

Optionally, the network access method provided in this embodiment of this application further includes a step of determining, by the network configuration assistant device, whether the distance between the network configuration assistant device and the IoT device is within the first distance. The following provides an example of an implementation in which the network configuration assistant device determines whether the distance between the network configuration assistant device and the IoT device is within the first distance, including steps S751 to S753. It should be understood that steps S751 to S753 are a manner in which the network configuration assistant device determines whether the distance between the network configuration assistant device and the IoT device is within the first distance. Alternatively, whether the distance between the network configuration assistant device and the IoT device is within the first distance may be determined in another manner. This is not specifically limited in embodiments of this application. For example, as shown in FIG. 7, the network access method provided in this embodiment of this application may further include the following steps.

S751: The network configuration assistant device sends a first broadcast packet. Correspondingly, the IoT device receives the first broadcast packet from the network configuration assistant device.

In this embodiment of this application, the first broadcast packet may be a broadcast scanning packet.

S752: The IoT device sends a first response packet to the network configuration assistant device. Correspondingly, the network configuration assistant device receives the first response packet from the IoT device.

In this embodiment of this application, the first response packet includes signal strength of the first broadcast packet. For example, the signal strength of the first broadcast packet may be a received signal strength indication (received signal strength indication, RSSI). This is not limited in embodiments of this application.

In this embodiment of this application, the first response packet further includes a device label of the IoT device. Optionally, the device label of the IoT device identifies the IoT device, or optionally, the device label of the IoT device identifies a type of the IoT device. For example, the device label of the IoT device identifies that the IoT device is a light device, or identifies that the type of the IoT device is a light-type device. Further, the network configuration assistant device may determine, based on the label, the first distance corresponding to the IoT device. For example, the first distance that is of the IoT device and that corresponds to the IoT device label is 0.5 m.

S753: The network configuration assistant device determines, based on the signal strength of the first broadcast packet, that the distance between the network configuration assistant device and the IoT device is within the first distance.

Optionally, the first distance in this embodiment of this application may be preconfigured by the network configuration assistant device. For example, a first distance that is of the light device or the light-type device and that is preconfigured by the network configuration assistant device is 0.5 m. If the distance that is between the network configuration assistant device and the IoT device and that is obtained by the network configuration assistant device through calculation based on the signal strength of the first broadcast packet is 0.4 m, the network configuration assistant device may determine that the distance between the network configuration assistant device and the IoT device is within the first distance.

Alternatively, optionally, the first distance in this embodiment of this application may be indicated by the IoT device label. In this case, that the network configuration assistant device determines, based on the signal strength of the first broadcast packet, that the distance between the network configuration assistant device and the IoT device is within the first distance may include: The network configuration assistant device determines, based on the signal strength of the first broadcast packet and the device label of the IoT device, that the distance between the network configuration assistant device and the IoT device is within the first distance. For example, a first distance that is of the light device or the light-type device and that is identified by the device label included in the first response packet is 0.5. If the distance that is between the network configuration assistant device and the IoT device and that is obtained by the network configuration assistant device through calculation based on the signal strength of the first broadcast packet is 0.4 m, the network configuration assistant device may determine that the distance between the network configuration assistant device and the IoT device is within the first distance.

In this embodiment of this application, the distance between the network configuration assistant device and the IoT device is obtained by the network configuration assistant device through periodic measurement. For example, the network configuration assistant device adjusts sending frequency of the first broadcast packet and a scanning duty cycle, to improve accuracy of the distance that is between the network configuration assistant device and the IoT device and that is determined by the network configuration assistant device.

In this embodiment of this application, the network configuration assistant device sends the first broadcast packet to the IoT device, and the network configuration assistant device may determine, based on the signal strength that is of the first broadcast packet and that is included in the first response packet, whether the distance between the network configuration assistant device and the IoT device is within the first distance. Further, if the distance between the network configuration assistant device and the IoT device is within the first distance, the network configuration assistant device may prompt the user to perform the authorization operation. The network configuration assistant device sends the first broadcast packet, so that stability of the first broadcast packet can be improved.

Optionally, the network access method provided in this embodiment of this application further includes: The network configuration assistant device confirms the IoT device that expects to access the target router. The following provides an example of a procedure in which the network configuration assistant device confirms the IoT device that expects to access the target router, including steps S710 to S740. It should be understood that steps S710 to S740 are a manner in which the network configuration assistant device confirms the IoT device that expects to access the target router. The network configuration assistant device may alternatively confirm, in another manner, the IoT device that expects to access the target router. This is not specifically limited in embodiments of this application. For example, as shown in FIG. 7, the network access method provided in this embodiment of this application may further include the following steps.

S710: The IoT device sends a second broadcast packet. Correspondingly, the network configuration assistant device receives the second broadcast packet.

In this embodiment of this application, after the IoT device is powered on, the IoT device may send the second broadcast packet. For example, the second broadcast packet includes a media access control (media access control, MAC) address of the IoT device and public key information. The MAC address and the public key information are used to generate a first sequence number encrypted by using a public key, where the first sequence number corresponds to the IoT device.

For example, there is a scenario in which a plurality of IoT devices simultaneously send broadcast packets after being powered on, and the user may view a scanning result of nearby IoT devices by using the first application, and select the IoT device that expects to access the target router. For example, the first application may be the first application described in the software application layer of the network configuration assistant device shown in FIG. 5. This is not limited in embodiments of this application.

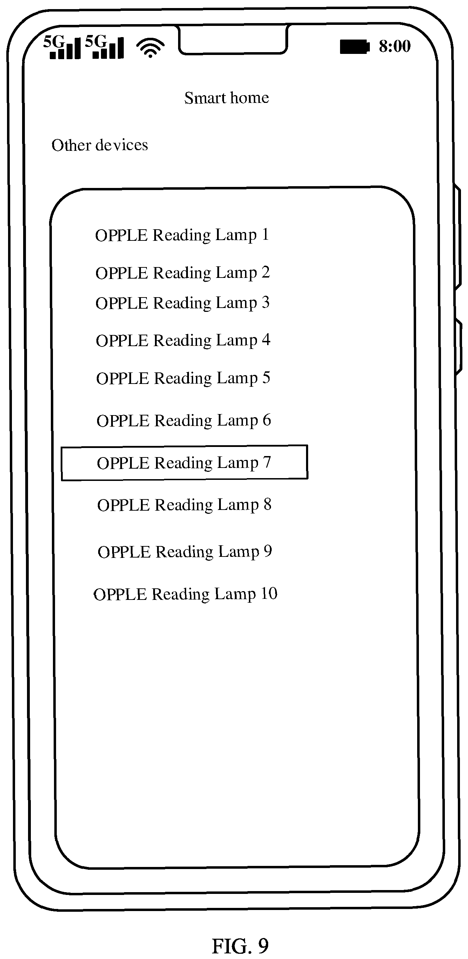

For example, FIG. 9 is a diagram of a scanning result interface of a first application according to an embodiment of this application. In a possible scenario, the user views a scanning result of a nearby IoT device, for example, a light device, in the first application. Labels of a plurality of scanned light devices are displayed on the interface of the first application. The user may select one of the light devices. However, in this case, because the labels, displayed in the scanning result, of the light devices are similar, the user cannot determine which light device in an environment is the light device selected by the user in the scanning result interface of the first application.

S720: The network configuration assistant device sends a probe packet. Correspondingly, the IoT device receives the probe packet from the network configuration assistant device.

In this embodiment of this application, the probe packet includes second information and a first sequence number encrypted by using a public key, and the second information indicates a hardware response of the IoT device. For example, the second information indicates that the hardware response of the IoT device is that a light-emitting diode (light-emitting diode, LED) blinks, a speaker emits a sound, or the like. This is not limited in embodiments of this application.

In this embodiment of this application, the network configuration assistant device sends the probe packet. The network configuration assistant device does not know in advance which IoT device to send the probe packet to, and only carries, in the probe packet, the first sequence number encrypted by using the public key. The IoT device receives the probe packet from the network configuration assistant device, and determines, based on the first sequence number encrypted by using the public key in the probe packet, that the probe packet is sent to the IoT device. Further, the IoT device determines the hardware response of the IoT device based on the second information.

S730: The IoT device triggers the hardware response based on the second information.

In this embodiment of this application, the IoT device triggers the hardware response based on the hardware response indicated by the second information. For example, when the hardware response indicated by the second information is that an LED or the like blinks, the IoT device triggers an LED light of the IoT device to blink; or when the hardware response indicated by the second information is that a speaker emits a sound, the IoT device triggers a speaker of the IoT device to emit a sound.

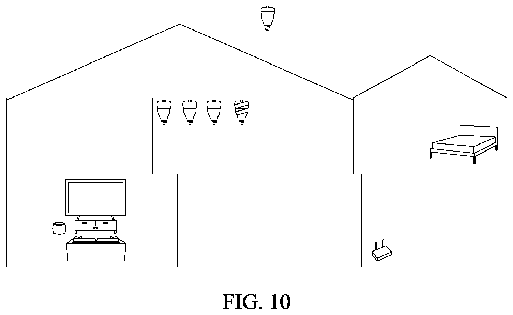

Correspondingly, the user may determine, based on the hardware response of the IoT device, which device in the environment is the IoT device selected on the scanning interface. FIG. 10 is a diagram which there are a plurality of similar devices in an environment according to an embodiment of this application. As shown in FIG. 10, there are a plurality of electric lights in the environment. The user may determine, based on an electric light whose LED light blinks, which electric light in the environment is an electric light selected on a scanning interface. A shadow in FIG. 10 indicates the blinking LED light.

S740: The network configuration assistant device sends confirmation information to the IoT device. Correspondingly, the IoT device receives the confirmation information from the network configuration assistant device.

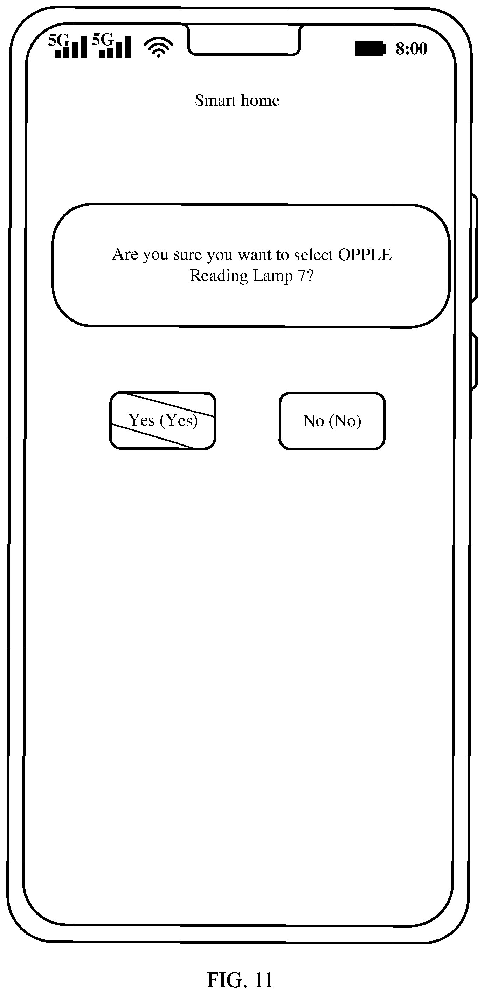

In this embodiment of this application, the network configuration assistant device sends the confirmation information to the IoT device, to confirm the IoT device that triggers the hardware response. For example, as shown in FIG. 11, the user may perform, based on the hardware response of the IoT device, a confirmation operation on the IoT device selected on the scanning interface.

Based on the foregoing solution, the network configuration assistant device sends the probe packet that carries the second information and the first sequence number encrypted by using the public key, so that the IoT device determines that the probe packet is specific to the IoT device. Further, the IoT device triggers the hardware response based on the second information, and the user may confirm the IoT device based on the hardware response. Further, the network configuration assistant device sends the confirmation information to the IoT device, to confirm the IoT device. In a possible scenario, when there are a plurality of similar IoT devices in an environment, the IoT device may trigger the hardware response of the IoT device, so that the user confirms the IoT device, to prevent an economic loss caused by incorrect access of an unauthorized device.

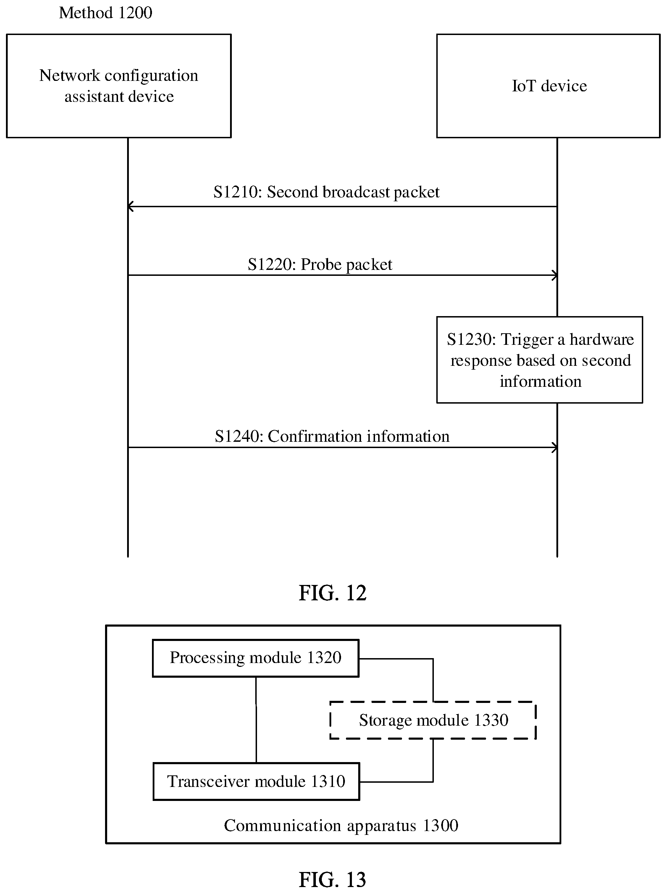

FIG. 12 is a diagram of another example of a network access method according to an embodiment of this application. The method is described by using interaction between a network configuration assistant device and an IoT device as an example. Certainly, actions of the network configuration assistant device in the method may alternatively be performed by an apparatus or a module in the network configuration assistant device, for example, a chip, a processor, or a processing unit in the network configuration assistant device. Actions of the IoT device in the method may alternatively be performed by an apparatus or a module in the IoT device, for example, a chip, a processor, or a processing unit in the IoT device. This is not specifically limited in embodiments of this application. Processing performed by a single execution body (for example, the network configuration assistant device or the IoT device) in this embodiment of this application may alternatively be divided to be performed by a plurality of execution bodies. These execution bodies may be logically and/or physically separated. For example, as shown in FIG. 12, the method 1200 includes the following steps.

S1210: The IoT device sends a second broadcast packet. Correspondingly, the network configuration assistant device receives the second broadcast packet.

In this embodiment of this application, for S1210, refer to related descriptions in step S710. Details are not described herein again.

S1220: The network configuration assistant device sends a probe packet. Correspondingly, the IoT device receives the probe packet from the network configuration assistant device.

In this embodiment of this application, for S1220, refer to related descriptions in step S720. Details are not described herein again.

S 1230: The IoT device triggers a hardware response based on second information.

In this embodiment of this application, for S1230, refer to related descriptions in step S730. Details are not described herein again.

S1240: The network configuration assistant device sends confirmation information to the IoT device. Correspondingly, the IoT device receives the confirmation information from the network configuration assistant device.

In this embodiment of this application, for S1240, refer to related descriptions in step S740. Details are not described herein again.

According to the network access method provided in this embodiment of this application, the network configuration assistant device sends the probe packet that carries second information and a first sequence number encrypted by using a public key, so that the IoT device determines that the probe packet is specific to the IoT device. Further, the IoT device triggers a hardware response based on the second information, and a user may confirm the IoT device based on the hardware response. Further, the network configuration assistant device sends the confirmation information to the IoT device, to confirm the IoT device. In a possible scenario, when there are a plurality of similar IoT devices in an environment, the IoT device may trigger the hardware response of the IoT device, so that the user confirms the IoT device, to prevent an economic loss caused by incorrect access of an unauthorized device.

The following describes, by using several specific examples, the network access methods provided in the method 700 and the method 1200.

For example, in a whole-home smart scenario, there is one AP (for example, a home router) and one Bluetooth speaker that is not configured with a network, and the user uses a mobile phone as a network configuration assistant device. Steps of performing network configuration on the Bluetooth speaker by the mobile phone include the following.

Step 1: Connect the Bluetooth speaker to a power supply and enter a network configuration procedure.

Step 2: The user holds the mobile phone close to the Bluetooth speaker, and the mobile phone periodically measures a distance between the mobile phone and the Bluetooth speaker, which is specifically as follows.

The mobile phone externally sends a broadcast scanning packet (corresponding to the first broadcast packet in the method 700). The Bluetooth speaker receives and parses the broadcast packet of the mobile phone, and parses RSSI signal strength in the packet. The Bluetooth speaker constructs a response frame (corresponding to the first response packet in the method 700) and returns the response frame to the mobile phone, where the response frame carries the detected RSSI signal strength and a device label of the Bluetooth speaker. The mobile phone determines, based on the RSSI strength and the device label in the response frame, whether a distance between the mobile phone and the Bluetooth speaker is within a first distance.

When the distance between the mobile phone and the Bluetooth speaker is within the first distance (for example, 0.5 m), an interface shown in FIG. 8 is displayed in a smart home app of the mobile phone, to prompt the user to perform an authorization operation.

Step 3: The user performs the authorization operation. For example, the user holds the mobile phone and shakes the mobile phone. Further, the mobile phone may send information about the home router to the Bluetooth speaker through Bluetooth, and the Bluetooth speaker may quickly access the home router based on the information about the home router.

For example, in a whole-home smart scenario, there is one AP (for example, a home router) and 10 IoT devices (for example, lights), and the user uses a mobile phone as a network configuration assistant device. A procedure of determining a target light by the user includes the following.

Step 1: After the 10 light devices are connected to a power supply, the 10 light devices externally send a broadcast frame carrying MAC addresses of the 10 light devices and public key information.

Step 2: The user views a scanning result of nearby devices in a whole-home smart app of the mobile phone, where identifiers of the 10 scanned light devices are displayed as shown in FIG. 9.

Step 3: The user selects a seventh light device shown in FIG. 9 from a scanning list of the mobile phone, and the mobile phone externally sends response information and a device probe frame carrying an internal sequence number (namely, a first sequence number corresponding to the seventh light device in the scanning list) encrypted by using a public key.

Step 4: After receiving the probe frame, the seventh light device triggers a hardware response (for example, an LED blinks or a speaker emits a sound) of the device, to clearly notify the user of a position of the light device.

Step 5: After observing the hardware response of the device, the user performs the confirmation operation shown in FIG. 11 in the scanning list, and performs a subsequent network configuration procedure.

The foregoing mainly describes, from a perspective of interaction between the network configuration assistant device and the IoT device, the solutions provided in embodiments of this application. Correspondingly, an embodiment of this application further provides a communication apparatus, and the communication apparatus is configured to implement the foregoing methods. The communication apparatus may be the network configuration assistant device in the foregoing method embodiments, an apparatus including the network configuration assistant device, or a component that can be used in the network configuration assistant device. Alternatively, the communication apparatus may be the IoT device in the foregoing method embodiments, an apparatus including the IoT device, or a component that can be used in the IoT device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be understood that division into modules in embodiments of this application is an example, and is merely logical function division. During actual implementation, there may be another division manner.

For example, FIG. 13 is a diagram of a communication apparatus according to an embodiment of this application. For example, the communication apparatus is the network configuration assistant device (which may be a chip of the network configuration assistant device, a module of the network configuration assistant device, or an internal apparatus of the network configuration assistant device) in the foregoing method embodiments. The network configuration assistant device includes a transceiver module 1310 and a processing module 1320. The transceiver module 1310 may also be referred to as a transceiver unit, and is configured to implement a transceiver function. For example, the transceiver module may be a transceiver circuit, a transceiver machine, a transceiver, or a communication interface.

In a solution, the processing module 1320 is configured to: if a distance between the network configuration assistant device and an IoT device is within a first distance, prompt a user to perform an authorization operation.

The transceiver module 1310 is configured to send first information to the IoT device in response to the authorization operation of the user, where the first information is used by the IoT device to access a target router.

In this embodiment of this application, the transceiver module 1310 is further configured to send a first broadcast packet and receive a first response packet, where the first response packet includes signal strength that is of the first broadcast packet and that is measured by the IoT device.

The processing module 1320 is further configured to determine, based on the signal strength of the first broadcast packet, that the distance between the network configuration assistant device and the IoT device is within the first distance.

In this embodiment of this application, the first response packet further includes a device label of the IoT device. The device label of the IoT device identifies the IoT device, or the device label of the IoT device identifies a type of the IoT device.

In this embodiment of this application, that the processing module 1320 is configured to determine, based on the signal strength of the first broadcast packet, that the distance between the network configuration assistant device and the IoT device is within the first distance includes: The processing module 1320 is configured to determine, based on the signal strength of the first broadcast packet and the device label of the IoT device, that the distance between the network configuration assistant device and the IoT device is within the first distance.

For example, the authorization operation includes at least one of the following: touching, pressing, or shaking.

In this embodiment of this application, the transceiver module 1310 is further configured to send a probe packet, where the probe packet includes second information and a first sequence number encrypted by using a public key, and the second information indicates a hardware response of the IoT device. The transceiver module 1310 is further configured to send confirmation information to the IoT device in response to the hardware response of the IoT device, where the confirmation information is used to confirm the IoT device corresponding to the first sequence number encrypted by using the public key.

In this embodiment of this application, the transceiver module 1310 is further configured to receive a second broadcast packet from the IoT device, where the second broadcast packet includes a media access control MAC address of the IoT device and the public key, and the MAC address and the public key are used to generate the first sequence number encrypted by using the public key.

All related content of the steps in the foregoing method embodiments may be cited in function descriptions of the corresponding functional modules. Details are not described herein again. Optionally, the communication apparatus 1300 may further include a storage module 1330. The storage module 1330 may be configured to store instructions and/or data, and the processing module 1320 may read the instructions and/or the data in the storage module 1330.

In this embodiment of this application, the network configuration assistant device is presented in a form of obtaining each functional module through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the network configuration assistant device may be in a form of network configuration assistant device 100 shown in FIG. 4.

For example, the processor 110 in the network configuration assistant device 100 shown in FIG. 4 may invoke computer-executable instructions stored in the internal memory 120, to enable the network configuration assistant device 100 to perform the communication method in the foregoing method embodiments.

Specifically, functions/implementation processes of the transceiver module 1310 and the processing module 1320 in FIG. 13 may be implemented by the processor 110 in the network configuration assistant device 100 shown in FIG. 4 by invoking the computer-executable instructions stored in the internal memory 120. Alternatively, functions/implementation processes of the processing module 1320 in FIG. 13 may be implemented by the processor 110 in the network configuration assistant device 100 shown in FIG. 4 by invoking the computer-executable instructions stored in the internal memory 120, and functions/implementation processes of the transceiver module 1310 in FIG. 13 may be implemented by the USB interface 130 in the network configuration assistant device 100 shown in FIG. 4.

The network configuration assistant device (which may be the chip of the network configuration assistant device, the module of the network configuration assistant device, or the internal apparatus of the network configuration assistant device) provided in this embodiment of this application may perform the foregoing signal transmission method. Therefore, for technical effects that can be achieved by the network configuration assistant device, refer to the foregoing method embodiments. Details are not described herein again.

Alternatively, for example, the communication apparatus is the IoT device (which may be a chip of the IoT device, a module of the IoT device, or an internal apparatus of the IoT device) in the foregoing method embodiments. The IoT device includes a transceiver module 1310 and a processing module 1320. The transceiver module 1310 may also be referred to as a transceiver unit, and is configured to implement a transceiver function. For example, the transceiver module may be a transceiver circuit, a transceiver machine, a transceiver, or a communication interface.

In a solution, the transceiver module 1310 is configured to receive first information, where the first information is sent by a network configuration assistant device in response to an authorization operation of a user after the network configuration assistant device determines that a distance between the network configuration assistant device and the IoT device is within a first distance and prompts the user to perform the authorization operation, and the first information is used by the IoT device to access a target router.

The processing module 1320 is configured to access the target router based on the first information.

In this embodiment of this application, the transceiver module 1310 is configured to: receive a first broadcast packet and measure signal strength of the first broadcast packet, and is further configured to send a first response packet, where the first response packet includes the signal strength that is of the first broadcast packet and that is measured by the IoT device.

In this embodiment of this application, the first response packet further includes a device label of the IoT device. The device label of the IoT device identifies the IoT device, or the device label of the IoT device identifies a type of the IoT device.

For example, the authorization operation includes at least one of the following: touching, pressing, or shaking.

In this embodiment of this application, the transceiver module 1310 is configured to receive a probe packet from the network configuration assistant device, where the probe packet includes second information and a first sequence number encrypted by using a public key, and the second information indicates a hardware response of the IoT device.

The processing module 1320 is configured to trigger the hardware response based on the second information.

The transceiver module 1310 is configured to: receive confirmation information from the network configuration assistant device, and access the target router based on the confirmation information, where the confirmation information is used to confirm the IoT device corresponding to the first sequence number encrypted by using the public key.

The transceiver module 1310 is configured to send a second broadcast packet to the network configuration assistant device, where the second broadcast packet includes a media access control MAC address of the IoT device and the public key, and the MAC address and the public key are used to generate the first sequence number encrypted by using the public key.

All related content of the steps in the foregoing method embodiments may be cited in function descriptions of the corresponding functional modules. Details are not described herein again. Optionally, the communication apparatus 1300 may further include a storage module 1330. The storage module 1330 may be configured to store instructions and/or data, and the processing module 1320 may read the instructions and/or the data in the storage module 1330.

In this embodiment of this application, the IoT device is presented in a form of obtaining each functional module through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the IoT device may be in a form of IoT device 200 shown in FIG. 6.

For example, the processor 210 in the IoT device 200 shown in FIG. 6 may invoke computer-executable instructions stored in the memory 220, to enable the IoT device 200 to perform the communication method in the foregoing method embodiments.

Specifically, functions/implementation processes of the transceiver module 1310 and the processing module 1320 in FIG. 13 may be implemented by the processor 210 in the IoT device 200 shown in FIG. 6 by invoking the computer-executable instructions stored in the memory 220. Alternatively, functions/implementation processes of the processing module 1320 in FIG. 13 may be implemented by the processor 210 in the IoT device 200 shown in FIG. 6 by invoking the computer-executable instructions stored in the memory 220, and functions/implementation processes of the transceiver module 1310 in FIG. 13 may be implemented by the communication interface 230 in the IoT device 200 shown in FIG. 6.

For example, FIG. 13 is a diagram of a communication apparatus according to an embodiment of this application. For example, the communication apparatus is the network configuration assistant device (which may be a chip of the network configuration assistant device, a module of the network configuration assistant device, or an internal apparatus of the network configuration assistant device) in the foregoing method embodiments. The network configuration assistant device includes a transceiver module 1310 and a processing module 1320. The transceiver module 1310 may also be referred to as a transceiver unit, and is configured to implement a transceiver function. For example, the transceiver module may be a transceiver circuit, a transceiver, a transceiver device, or a communication interface.

In a solution, the processing module 1320 is configured to send a probe packet to an IoT device, where the probe packet includes second information and a first sequence number encrypted by using a public key, and the second information indicates a hardware response of the IoT device.

The transceiver module is further configured to send confirmation information to the IoT device in response to the hardware response of the IoT device, where the confirmation information is used to confirm the IoT device corresponding to the first sequence number encrypted by using the public key.

In this embodiment of this application, the transceiver module 1310 is further configured to receive a second broadcast packet from the IoT device, where the second broadcast packet includes a media access control MAC address of the IoT device and the public key, and the MAC address and the public key are used to generate the first sequence number encrypted by using the public key.

All related content of the steps in the foregoing method embodiments may be cited in function descriptions of the corresponding functional modules. Details are not described herein again. Optionally, the communication apparatus 1300 may further include a storage module 1330. The storage module 1330 may be configured to store instructions and/or data, and the processing module 1320 may read the instructions and/or the data in the storage module 1330.

In this embodiment of this application, the network configuration assistant device is presented in a form of obtaining each functional module through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the network configuration assistant device may be in a form of network configuration assistant device 100 shown in FIG. 4.

For example, the processor 110 in the network configuration assistant device 100 shown in FIG. 4 may invoke computer-executable instructions stored in the internal memory 120, to enable the network configuration assistant device 100 to perform the communication method in the foregoing method embodiments.

Specifically, functions/implementation processes of the transceiver module 1310 and the processing module 1320 in FIG. 13 may be implemented by the processor 110 in the network configuration assistant device 100 shown in FIG. 4 by invoking the computer-executable instructions stored in the internal memory 120. Alternatively, functions/implementation processes of the processing module 1320 in FIG. 13 may be implemented by the processor 110 in the network configuration assistant device 100 shown in FIG. 4 by invoking the computer-executable instructions stored in the internal memory 120, and functions/implementation processes of the transceiver module 1310 in FIG. 13 may be implemented by the USB interface 130 in the network configuration assistant device 100 shown in FIG. 4.

The network configuration assistant device (which may be the chip of the network configuration assistant device, the module of the network configuration assistant device, or the internal apparatus of the network configuration assistant device) provided in this embodiment of this application may perform the foregoing signal transmission method. Therefore, for technical effects that can be achieved by the network configuration assistant device, refer to the foregoing method embodiments. Details are not described herein again.

Alternatively, for example, the communication apparatus is the IoT device (which may be a chip of the IoT device, a module of the IoT device, or an internal apparatus of the IoT device) in the foregoing method embodiments. The IoT device includes a transceiver module 1310 and a processing module 1320. The transceiver module 1310 may also be referred to as a transceiver unit, and is configured to implement a transceiver function. For example, the transceiver module may be a transceiver circuit, a transceiver machine, a transceiver, or a communication interface.

In a solution, the transceiver module 1310 is configured to receive a probe packet from a network configuration assistant device, where the probe packet includes second information and a first sequence number encrypted by using a public key, and the second information indicates a hardware response of the IoT device.

The processing module 1320 is configured to trigger the hardware response based on the second information.

The transceiver module 1310 is further configured to: receive confirmation information from the network configuration assistant device, and access a target router based on the confirmation information, where the confirmation information is used to confirm the IoT device corresponding to the first sequence number encrypted by using the public key.

In this embodiment of this application, the transceiver module 1310 is further configured to send a second broadcast packet to the network configuration assistant device, where the second broadcast packet includes a media access control MAC address of the IoT device and the public key, and the MAC address and the public key are used to generate the first sequence number encrypted by using the public key.

All related content of the steps in the foregoing method embodiments may be cited in function descriptions of the corresponding functional modules. Details are not described herein again. Optionally, the communication apparatus 1300 may further include a storage module 1330. The storage module 1330 may be configured to store instructions and/or data, and the processing module 1320 may read the instructions and/or the data in the storage module 1330.

In this embodiment of this application, the IoT device is presented in a form of obtaining each functional module through division in an integrated manner. The "module" herein may be an ASIC, a circuit, a processor that executes one or more software or firmware programs, a memory, an integrated logic circuit, and/or another component capable of providing the foregoing functions. In a simple embodiment, a person skilled in the art may figure out that the IoT device may be in a form of IoT device 200 shown in FIG. 6.

For example, the processor 210 in the IoT device 200 shown in FIG. 6 may invoke computer-executable instructions stored in the memory 220, to enable the IoT device 200 to perform the communication method in the foregoing method embodiments.

Specifically, functions/implementation processes of the transceiver module 1310 and the processing module 1320 in FIG. 13 may be implemented by the processor 210 in the IoT device 200 shown in FIG. 6 by invoking the computer-executable instructions stored in the memory 220. Alternatively, functions/implementation processes of the processing module 1320 in FIG. 13 may be implemented by the processor 210 in the IoT device 200 shown in FIG. 6 by invoking the computer-executable instructions stored in the memory 220, and functions/implementation processes of the transceiver module 1310 in FIG. 13 may be implemented by the communication interface 230 in the IoT device 200 shown in FIG. 6.

It should be understood that one or more of the modules or units may be implemented by software, hardware, or a combination thereof. When any one of the modules or units is implemented by software, the software exists in a form of computer program instruction, and is stored in a memory, and a processor may be configured to execute the program instructions and implement the foregoing method procedures. The processor may be disposed in a SoC (system-on-a-chip) or an ASIC, or may be an independent semiconductor chip. In addition to a core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor configured to implement the method in any one of the foregoing method embodiments. In a possible design, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may alternatively not include the memory. When the communication apparatus is a chip system, the chip system may include a chip, or may include the chip and another discrete component. This is not specifically limited in embodiments of this application.

Optionally, an embodiment of this application further provides a computer-readable storage medium. The computer-readable storage medium stores a computer program or instructions. When the computer program or the instructions are run on a communication apparatus, the communication apparatus is enabled to perform the method in any one of the foregoing method embodiments or any one of the implementations of the foregoing method embodiments.

Optionally, an embodiment of this application further provides a communication system. The communication system includes the IoT device in the foregoing method embodiments and the network configuration assistant device in the foregoing method embodiments.

All or some of the foregoing embodiments may be implemented by using software, hardware, firmware, or any combination thereof. When a software program is used to implement embodiments, all or some of the foregoing embodiments may be implemented in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce better effects.

Although this application is described with reference to specific features and embodiments thereof, it is clear that various modifications and combinations may be made to them without departing from the spirit and scope of this application. Correspondingly, the specification and accompanying drawings are merely examples of descriptions of this application defined by the appended claims, and are considered as any of or all modifications, variations, combinations, or equivalents that cover the scope of this application. It is clearly that a person skilled in the art can make various modifications and variations to this application without departing from the spirit and scope of this application. This application is intended to cover these modifications and variations of this application provided that they fall within the scope of the claims of this application and an equivalent technology thereof.

## Claims

1. A network access method, wherein the method is applied to a network configuration assistant device, and the method comprises:
if a distance between the network configuration assistant device and an internet of things IoT device is within a first distance, prompting a user to perform an authorization operation; and
sending first information to the IoT device in response to the authorization operation of the user, wherein the first information is used by the IoT device to access a target router.

2. The method according to claim 1, wherein the method further comprises:
sending a first broadcast packet;
receiving a first response packet, wherein the first response packet comprises signal strength that is of the first broadcast packet and that is measured by the IoT device; and
determining, based on the signal strength of the first broadcast packet, that the distance between the network configuration assistant device and the IoT device is within the first distance.

3. The method according to claim 2, wherein the first response packet further comprises a device label of the IoT device, and the device label of the IoT device identifies the IoT device, or the device label of the IoT device identifies a type of the IoT device; and
determining, based on the signal strength of the first broadcast packet, that the distance between the network configuration assistant device and the IoT device is within the first distance comprises:
determining, based on the signal strength of the first broadcast packet and the device label of the IoT device, that the distance between the network configuration assistant device and the IoT device is within the first distance.

4. The method according to any one of claims 1 to 3, wherein the authorization operation comprises at least one of the following: touching, pressing, or shaking.

5. The method according to any one of claims 1 to 4, wherein the method further comprises:
sending a probe packet, wherein the probe packet comprises second information and a first sequence number encrypted by using a public key, and the second information indicates a hardware response of the IoT device; and
sending confirmation information to the IoT device in response to the hardware response of the IoT device, wherein the confirmation information is used to confirm the IoT device corresponding to the first sequence number encrypted by using the public key.

6. The method according to claim 5, wherein the method further comprises:
receiving a second broadcast packet from the IoT device, wherein the second broadcast packet comprises a media access control MAC address of the IoT device and the public key, and the MAC address and the public key are used to generate the first sequence number encrypted by using the public key.

7. The method according to any one of claims 1 to 6, wherein the distance between the network configuration assistant device and the IoT device is obtained through periodic measurement.

8. A network access method, wherein the method is applied to a network configuration assistant device, and the method comprises:
sending a probe packet, wherein the probe packet comprises second information and a first sequence number encrypted by using a public key, and the second information indicates a hardware response of an internet of things IoT device; and
sending confirmation information to the IoT device in response to the hardware response of the IoT device, wherein the confirmation information is used to confirm the IoT device corresponding to the first sequence number encrypted by using the public key.

9. The method according to claim 8, wherein the method further comprises:
receiving a second broadcast packet from the IoT device, wherein the second broadcast packet comprises a media access control MAC address of the IoT device and the public key, and the MAC address and the public key are used to generate the first sequence number encrypted by using the public key.

10. A network access method, wherein the method is applied to an internet of things IoT device, and the method comprises:
receiving first information, wherein the first information is sent by a network configuration assistant device in response to an authorization operation of a user after the network configuration assistant device determines that a distance between the network configuration assistant device and the IoT device is within a first distance and prompts the user to perform the authorization operation, and the first information is used by the IoT device to access a target router; and
accessing the target router based on the first information.

11. The method according to claim 10, wherein the method further comprises:
receiving a first broadcast packet, and measuring signal strength of the first broadcast packet; and
sending a first response packet, wherein the first response packet comprises the signal strength that is of the first broadcast packet and that is measured by the IoT device.

12. The method according to claim 11, wherein the first response packet further comprises a device label of the IoT device, and the device label of the IoT device identifies the IoT device, or the device label of the IoT device identifies a type of the IoT device.

13. The method according to any one of claims 10 to 12, wherein the authorization operation comprises at least one of the following: touching, pressing, or shaking.

14. The method according to any one of claims 10 to 13, wherein the method further comprises:
receiving a probe packet from the network configuration assistant device, wherein the probe packet comprises second information and a first sequence number encrypted by using a public key, and the second information indicates a hardware response of the IoT device;
triggering the hardware response based on the second information; and
receiving confirmation information from the network configuration assistant device, and accessing the target router based on the confirmation information, wherein the confirmation information is used to confirm the IoT device corresponding to the first sequence number encrypted by using the public key.

15. The method according to claim 14, wherein the method further comprises:
sending a second broadcast packet to the network configuration assistant device, wherein the second broadcast packet comprises a media access control MAC address of the IoT device and the public key, and the MAC address and the public key are used to generate the first sequence number encrypted by using the public key.

16. The method according to any one of claims 10 to 15, wherein the distance between the network configuration assistant device and the IoT device is obtained through periodic measurement.

17. A network access method, wherein the method is applied to an internet of things IoT device, and the method comprises:
receiving a probe packet from a network configuration assistant device, wherein the probe packet comprises second information and a first sequence number encrypted by using a public key, and the second information indicates a hardware response of the IoT device;
triggering the hardware response based on the second information; and
receiving confirmation information from the network configuration assistant device, and accessing the target router based on the confirmation information, wherein the confirmation information is used to confirm the IoT device corresponding to the first sequence number encrypted by using the public key.

18. The method according to claim 17, wherein the method further comprises:
sending a second broadcast packet to the network configuration assistant device, wherein the second broadcast packet comprises a media access control MAC address of the IoT device and the public key, and the MAC address and the public key are used to generate the first sequence number encrypted by using the public key.

19. A communication apparatus, comprising:
a processing module, configured to: if a distance between the network configuration assistant device and an internet of things IoT device is within a first distance, prompt a user to perform an authorization operation; and
a transceiver module, configured to send first information to the IoT device in response to the authorization operation of the user, wherein the first information is used by the IoT device to access a target router.

20. A communication apparatus, comprising:
a transceiver module, configured to receive first information, wherein the first information is sent by a network configuration assistant device in response to an authorization operation of a user after the network configuration assistant device determines that a distance between the network configuration assistant device and the IoT device is within a first distance and prompts the user to perform the authorization operation, and the first information is used by the IoT device to access a target router; and
a processing module, configured to access the target router based on the first information.

21. A communication apparatus, comprising:
a transceiver module, configured to send a probe packet to an internet of things IoT device, wherein the probe packet comprises second information and a first sequence number encrypted by using a public key, and the second information indicates a hardware response of the IoT device; and
the transceiver module is further configured to send confirmation information to the IoT device in response to the hardware response of the IoT device, wherein the confirmation information is used to confirm the IoT device corresponding to the first sequence number encrypted by using the public key.

22. A communication apparatus, comprising:
a transceiver module, configured to receive a probe packet from a network configuration assistant device, wherein the probe packet comprises second information and a first sequence number encrypted by using a public key, and the second information indicates a hardware response of the IoT device; and
a processing module, configured to trigger the hardware response based on the second information, wherein
the transceiver module is further configured to: receive confirmation information from the network configuration assistant device, and access the target router based on the confirmation information, wherein the confirmation information is used to confirm the IoT device corresponding to the first sequence number encrypted by using the public key.

23. A communication apparatus, wherein the communication apparatus comprises a processor, and the processor is configured to enable, by running a computer program or instructions or by using a logic circuit, the communication apparatus to perform the method according to any one of claims 1 to 7 or perform the method according to any one of claims 10 to 16.

24. A computer-readable storage medium, wherein the computer-readable storage medium stores computer instructions or a program, and when the computer instructions or the program is run on a computer, the communication apparatus is enabled to perform the method according to any one of claims 1 to 7 or perform the method according to any one of claims 10 to 16.

25. A communication system, wherein the communication system comprises the communication apparatus according to claim 19 and the communication apparatus according to claim 20.

26. A communication apparatus, wherein the communication apparatus comprises a processor, and the processor is configured to enable, by running a computer program or instructions or by using a logic circuit, the communication apparatus to perform the method according to claim 8 or 9 or perform the method according to claim 17 or 18.

27. A computer-readable storage medium, wherein the computer-readable storage medium stores computer instructions or a program, and when the computer instructions or the program is run on a computer, the communication apparatus is enabled to perform the method according to claim 8 or 9 or perform the method according to claim 17 or 18.

28. A communication system, wherein the communication system comprises the communication apparatus according to claim 19 and the communication apparatus according to claim 20.
